# EUROPEAN PATENT SPECIFICATION

(11) **EP 2 208 909 B1**
(45) Date of publication and mention of the grant of the patent: **03.07.2013**
(21) Application number: 08848294.8
(22) Date of filing: 06.11.2008
(51) Int. Cl.: F16D 55/224, B61H 5/00, F16D 65/14

(54) **CALIPER BRAKE DEVICE FOR VEHICLE**
SATTELBREMSVORRICHTUNG FÜR EIN FAHRZEUG
DISPOSITIF DE FREIN À ÉTRIER POUR VÉHICULE

(30) Priority: 06.11.2007 JP 2007288915
(43) Date of publication of application: 21.07.2010
(73) Proprietor: KAYABA INDUSTRY CO., LTD., Minato-ku Tokyo 105-6111 (JP)
(72) Inventor: SUZUKI, Tsutomu, Tokyo 105-6111 (JP); WAKABAYASHI, Hiroaki, Tokyo 105-6111 (JP); OOKAWARA, Yoshiyuki, Tokyo 105-6111 (JP)
(74) Representative: Grünecker, Kinkeldey, Stockmair & Schwanhäusser
(86) International application number: PCT/JP2008/070631
(87) International publication number: WO 2009/060993

(56) References cited:
- DE-A1- 3 222 667
- JP-A- 8 226 471
- JP-A- 8 226 471
- JP-A- 10 267 058
- JP-A- 11 230 202
- JP-A- 58 005 541
- JP-A- 2000 130 479
- JP-U- 63 160 446

## Description

### TECHNICAL FIELD

This invention relates to a caliper brake device for a vehicle, which applies a brake to a rotary body by sandwiching two frictional surfaces formed on either side face of the rotary body.

### BACKGROUND ART

A railway vehicle is typically installed with a pneumatic-hydraulic converter that converts air pressure supplied from an air pressure source into oil pressure such that a hydraulic brake is activated by the oil pressure, which is supplied thereto from the pneumatic-hydraulic converter via a hydraulic pipe.

In relation to this point, JPH08-226469 and JPH08-226471, published by the Japan Patent Office in 1996, disclose a hydraulic brake device for a railway vehicle in which a hydraulic cylinder presses a brake pad against a frictional surface of a rotary body such as a brake rotor in accordance with a supplied oil pressure. JPH08-226471 is considered to represent the closest prior art.

Meanwhile, by installing an air pressure brake that is activated by air pressure supplied from the air pressure source in the railway vehicle, it may be possible to omit the pneumatic-hydraulic converter and the hydraulic pipe.

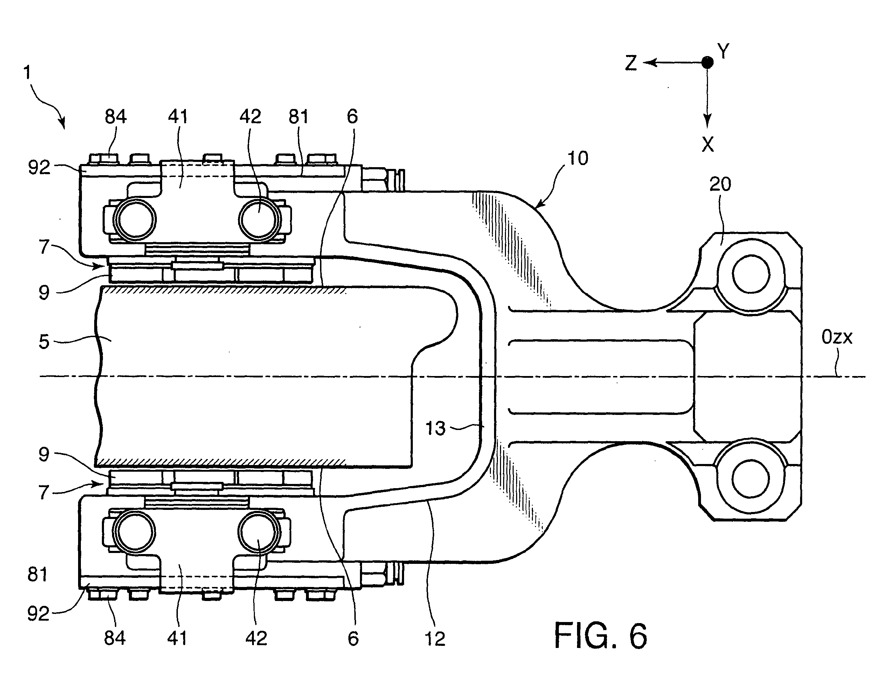

In relation to this point, JPH 11-193835, published by the Japan Patent Office in 1999, discloses an air brake device for a railway vehicle in which an air pressure actuator presses a brake pad against a frictional surface of a rotary body when compressed air is supplied to an air chamber of the air pressure actuator. FIG. 6 of this conventional technique further discloses an air brake device employing a lever.

### DISCLOSURE OF THE INVENTION

In these railway vehicle brake devices, the hydraulic cylinder or the actuator presses a part of the brake pad rather than pressing the entire brake pad. As a result, a brake caliper may be bent by a reaction force corresponding to the pressing force such that contact with the frictional surface cannot be secured reliably. Further, when a local temperature increase occurs in the brake pad or a frictional coefficient of the brake pad decreases, it may be impossible for the brake pad to exhibit its original braking force. As a result, partial wear is likely to occur on the brake pad.

In the case of an air brake employing a lever, it is difficult to cause the brake pad to press the frictional surface evenly due to the effect of frictional force acting on a bearing portion of the lever, and therefore partial wear is particularly likely to occur on the brake pad.

It is therefore an object of this invention to make a pressing force with which a brake pad presses a rotary body even.

To achieve the object described above, this invention provides a caliper brake device for a vehicle, which applies a braking force to a rotary body by sandwiching a pair of frictional surfaces formed on either side of the rotary body, comprising a brake caliper that is fixed to a vehicle body and comprises a pair of caliper arms disposed so as to straddle the rotary body, a brake pad that is supported on each of the caliper arms so as to face the corresponding frictional surface of the pair of frictional surfaces, and applies a braking force to the corresponding frictional surface by displacing toward the corresponding frictional surfaces, a pressure chamber formed in each of the caliper arms, characterised in that a diaphragm that expands in accordance with a pressure of the pressure chamber, a plurality of pistons that drive the brake pad toward the corresponding frictional surface in accordance with the expansion of the diaphragm, and a guide member that guides a displacement of the plurality of pistons in a right-angle direction relative to the corresponding frictional surface.

The details as well as other features and advantages of this invention are set forth in the remainder of the specification and are shown in the accompanying drawings.

### BRIEF DESCRIPTION OF THE DRAWINGS

FIG. 1 is a plan view of a caliper brake device according to this invention.
FIG. 2 is a back view of the caliper brake device.
FIG. 3 is a side view of the caliper brake device.
FIG. 4 is a longitudinal sectional view of the caliper brake device taken along a line IV-IV in FIG. 3.
FIGs. 5A and 5B are a plan view of a brake pad of a conventional hydraulic piston type caliper brake device and a plan view of a brake pad of the caliper brake device according to this invention.
FIG. 6 is a plan view of a caliper brake device according to a second embodiment of this invention.
FIG. 7 is a back view of the caliper brake device according to the second embodiment of this invention.
FIG. 8 is a side view of the caliper brake device according to the second embodiment of this invention.
FIG. 9 is a longitudinal sectional view of the caliper brake device taken along a line IX-IX in FIG. 8.
FIG. 10 is a longitudinal sectional view of a caliper brake device according to a third embodiment of this invention.

### BEST MODES FOR CARRYING OUT THE INVENTION

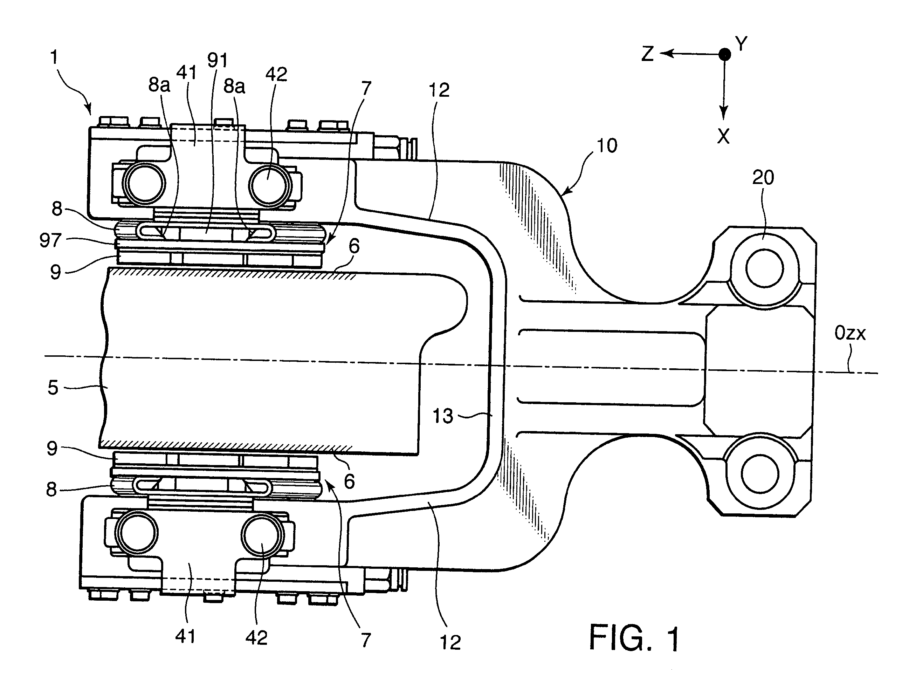

Referring to FIG. 1 of the drawings, a caliper brake device 1 for a railway vehicle applies a brake to the rotation of a vehicle wheel 5 using a pair of brake pads 7. An X axis, a Y axis, and a Z axis in the figure correspond to an axle direction of the vehicle wheel 5, a vertical direction, and a front-rear direction, respectively. A pair of frictional surfaces 6 are formed in advance on the respective side faces of the vehicle wheel 5 so as to face the pair of brake pads 7.

The pair of brake pads 7 are supported respectively on tip ends of a pair of caliper arms 12. The pair of caliper arms 12 are formed as a two-pronged fork extending from a yoke 13 of a brake caliper 10 so as to straddle the vehicle wheel 5. The brake caliper 10 comprises a flange portion 20. The flange portion 20 is fixed to a bogie of the railway vehicle via a bolt.

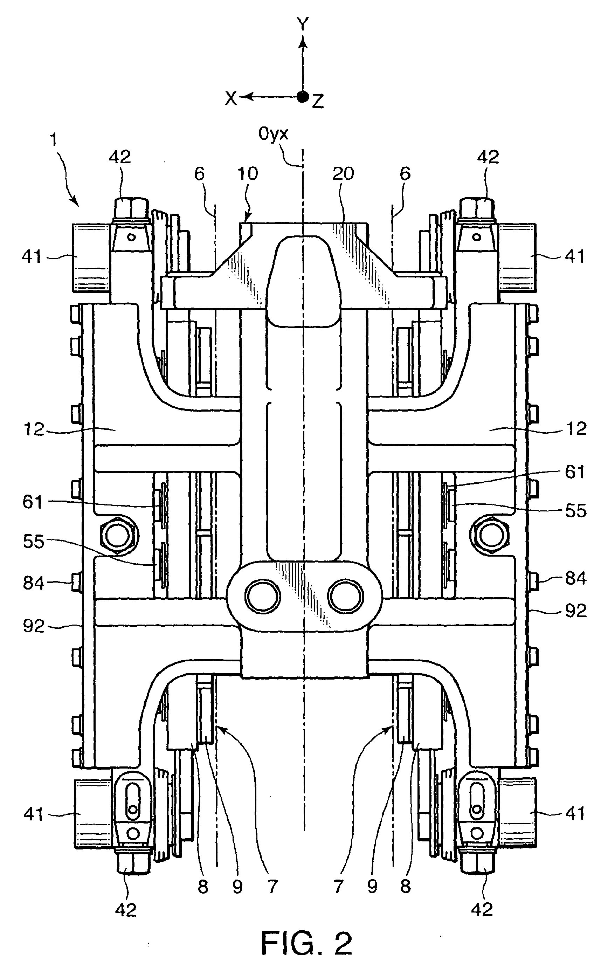

The brake caliper 10 has a symmetrical shape relative to a center line Ozx shown in FIG. 1 and a center line Oyx shown in FIG. 2.

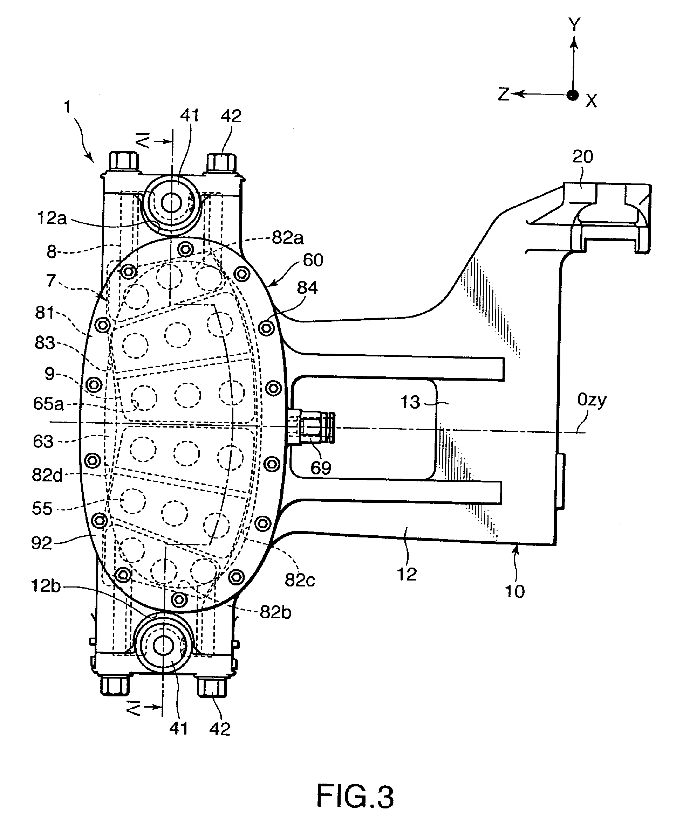

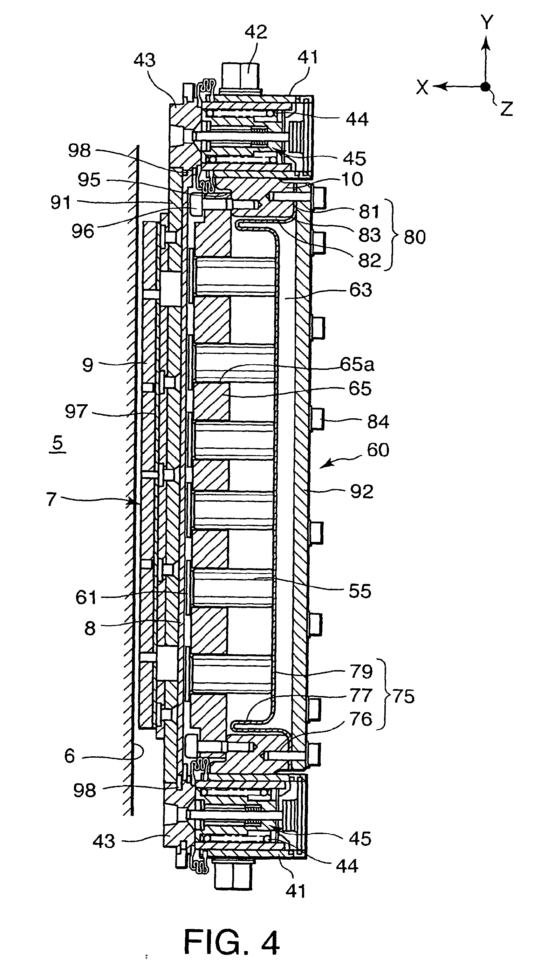

Referring to FIGs. 3 and 4, a diaphragm type actuator 60 is provided on the respective tip ends of the pair of caliper arms 12 to drive the brake pads 7.

The brake pads 7 are supported on the respective caliper arms 12 via the actuators 60 to be capable of displacing in the X axis direction.

Referring to FIGs. 1 and 4, the brake pad 7 is constituted by a lining 9, a body 97 to which the lining 9 is fixed, and an equal width engaging portion 91 formed on a rear surface of the body 97. The engaging portion 91 is inserted into the caliper arm 12 via a holder 8 to be free to displace in the Y axis direction. The holder 8 comprises a guide rail 8a that opposes the Y axis direction, for accommodating and holding the engaging portion 91.

Referring to FIG. 4, an upper end and a lower end of the holder 8 are respectively fitted into engaging grooves 98 formed in an outer periphery of upper and lower anchor pins 43. The anchor pins 43 project toward the vehicle wheel 5 from adjustors 41 that are respectively fixed to an upper end and a lower end of the caliper arm 12 by anchor bolts 42. By fitting the upper end and lower end of the holder 8 into the engaging grooves 98, an upper end and a lower end of the engaging portion 91 of the brake pad 7 abut against the tip ends of the anchor pins 43 such that displacement of the brake pad 7 in the Y axis direction is restricted.

To attach the brake pad 7 to the caliper arm 12, the engaging portion 91 of the brake pad 7 is inserted into an inner side of the guide rail 8a of the holder 8 from below in a state where the adjustor 41 and the anchor pin 43 are detached from the lower end of the caliper arm 12. When the engaging portion 91 has reached a predetermined position of the holder 8, the adjustor 41 and the anchor pin 43 are fixed to the lower end of the caliper arm 12 by the anchor bolt 42. Thus, the upper end and lower end of the holder 8 are respectively fitted into the engaging grooves 98 of the anchor pins 43 such that displacement of the brake pad 7 in the Y axis direction is restricted.

The adjustor 41 comprises a return spring 44 that biases the brake pad 7 in a separating direction from the frictional surface 6, and a gap adjustment mechanism 45 that adjusts a gap between the brake pad 7 and the frictional surface 6 to a substantially fixed value when a force other than the spring force of the return spring 44 does not act on the brake pad 7. When the brake is disengaged, the brake pad 7 is removed from the frictional surface 6 by the return spring 44 and opposes the frictional surface 6 at the gap prescribed by the gap adjustment mechanism 45.

The adjustor 41 is a well-known mechanism disclosed in JPH06-288417, published by the Japan Patent Office in 1994. The content thereof is incorporated herein by reference, and therefore a detailed description has been omitted.

By means of the support structure described above, the brake pad 7 is supported by the caliper arm 12 to be capable of displacing in the X axis direction while remaining parallel to the frictional surface 6.

Referring to FIG. 3, the actuator 60 is disposed between the upper and lower adjustors 41. Adjustor attachment recess portions 12a, 12b formed as arc-shaped notches for attaching the adjustors 41 are formed in the upper end and lower end of the caliper arm 12.

Returning to FIG. 4, the actuator 60 comprises a cylinder 80 formed in the caliper arm 12, a diaphragm 75 housed in the cylinder 80, a cover 92 that closes one end of the cylinder 80 to form a bottom portion, a plurality of pistons 55 interposed between the diaphragm 75 and the holder 8, and a guide frame 65 that supports the pistons 55 so that the pistons 55 can slide in the X axis direction.

A pressure chamber 63 is formed between the diaphragm 75 and the cover 92 in the inside of the cylinder 80. The pressure chamber 63 is caused to expand by compressed air supplied from the outside, and the diaphragm 75 presses the brake pad 7 in the X axis direction via the pistons 55 and the holder 8 such that the brake pad 7 is pressed against the frictional surface 6. For this purpose, the holder 8 is formed in advance with a larger planar form than a region of the diaphragm 75 in which the pistons 55 are disposed.

The cylinder 80 comprises a cylinder inner wall 82 that has a substantially elliptical cross-section and extends in the X axis direction, the cover 92, which closes one end of the cylinder 80 to form a bottom portion, and a ring-shaped attachment seat 81 having a substantially elliptical outer form for latching a peripheral edge portion 76 of the diaphragm 75 to a peripheral edge portion of the cover 92. The attachment seat 81 is formed on a plane defined by the Y axis and the Z axis.

Returning to FIG. 3, the cover 92 has an identical substantially elliptical outer form to the attachment seat 81. A plurality of bolt holes are formed in the attachment seat 81 at predetermined intervals, and the cover 92 is fixed to the attachment seat 81 by bolts 84 screwed into the bolt holes. The cover 92 and the attachment seat 81 are symmetrical about a center line Ozy of the brake pad 7.

The lining 9 of the brake pad 7 takes an overall curved shape in a rotation direction of the vehicle wheel 5, and is divided into a plurality of segments relative to the rotation direction of the vehicle wheel 5, as shown by broken lines in the figure. Each segment is fixed to the body 97 shown in FIG. 4.

The cylinder inner wall 82 is constituted by curved front and rear curved wall portions 82c and 82d, and upper and lower arc-shaped wall portions 82a and 82b connected to the front and rear curved wall portions 82c and 82d. The pressure chamber 63 having a substantially elliptical cross-section, which is delimited by these wall surfaces, has a larger sectional area than the lining 9 of the brake pad 7.

Returning to FIG. 4, the diaphragm 75 is constituted by the peripheral edge portion 76, a bellows portion 77 that expands from the peripheral edge portion 76 toward the guide frame 65 along the cylinder inner wall 82 and then curves back substantially 180 degrees inward, and a piston pressing portion 79 that forms a parallel plane to the brake pad 7 on the inside of the bellows portion 77. The peripheral edge portion 76, bellows portion 77, and piston pressing portion 79 are formed integrally from an elastic material such as rubber. The piston pressing portion 79 has a substantially elliptical planar form which is slightly smaller than, but similar to, a transverse section of the cylinder 80 defined by the cylinder inner wall 82.

The peripheral edge portion 76 of the diaphragm 75 is sandwiched between the attachment seat 81 and the cover 92. A chamfered portion 83 is formed between the attachment seat 81 and the cylinder inner wall 82 of the cylinder 80. The chamfered portion 83 serves to ensure that the diaphragm 75 curves gently, rather than sharply, from the peripheral edge portion 76 to the bellows portion 77.

A compound material formed by combining a reinforcing material such as carbon fiber or Kevler fiber, for example, with a resinous elastic material may be used as the material of the diaphragm 75. Alternatively, the diaphragm 75 may be constituted by a thin metal plate.

An attachment seat 95 opposing the vehicle wheel 5 is formed on an opposite end portion of the cylinder 80 to the cover 92. The guide frame 65 is fastened to the attachment seat 95 via a plurality of bolts 96. The guide frame 65 may be formed integrally with the brake caliper 10 in advance.

The plurality of pistons 55 respectively penetrate guide holes 65a formed in the guide frame 65 to be free to slide, and are interposed between the piston pressing portion 79 of the diaphragm 75 and the holder 8. A disc-shaped adiabatic plate 61 formed from an adiabatic material is attached to a contact surface of the piston 55 that contacts the holder 8. Instead of employing the adiabatic plate 61, processing such as adiabatic material spraying may be implemented on the piston 55 to improve the heat insulation performance of the piston 55.

Returning to FIG. 3, the guide holes 65a are formed at equal angular intervals in three concentric circles centering on the axle of the vehicle wheel 5. The guide holes 65a arranged in a central circle of the three concentric circles are disposed at equal intervals facing a central portion of the brake pad 7. The guide holes 65a arranged in an outside circle of the three concentric circles are disposed at equal intervals along the curved wall portion 82c so as to face an outer peripheral portion of the brake pad 7. The guide holes 65a arranged in an inside circle of the three concentric circles are disposed at equal intervals facing an inner peripheral portion of the brake pad 7.

An outer diameter of each piston 55 is set at 22 millimeters (mm), for example. The pistons 55 are disposed at a substantially equal density over the entire region of the brake pad 7.

Here, the pistons 55 are disposed in three columns, but the arrangement of the pistons 55 is not limited thereto. By varying the outer diameter and axial direction length of the pistons 55, a distribution of the pressing force applied to the brake pad 7 can be controlled.

A through hole 69 for supplying compressed air to the pressure chamber 63 from an air pressure source installed in the railway vehicle is formed in the brake caliper 10. The through hole 69 is formed on the center line Ozy of the brake caliper 10 by mechanical processing. The supply of compressed air into the pressure chamber 63 through the through hole 69 is controlled via a switching valve that operates in accordance with a command signal from a controller. When braking is not underway, the pressure chamber 63 is open to the atmosphere.

In the caliper brake device 1, the brake pad 7 and actuator 60 constituted as described above are provided on the respective tip ends of the pair of caliper arms 12.

When braking is not underway in the caliper brake device 1, the brake pads 7 are removed from the frictional surfaces 6 of the vehicle wheel 5 by the elastic force of the return springs 44 of the pair of adjustors 41 in the respective caliper arms 12. Furthermore, the pressure in the pressure chamber 63 is low, and therefore the diaphragm 75 contracts such that the pistons 55 are held in a withdrawn position.

During braking, the diaphragm 75 expands in accordance with the supply of compressed air to the pressure chamber 63 in the respective caliper arms 12. Thus, as shown in FIG. 2, the return springs 44 of the adjustors 41 are deformed such that the brake pads 7 are pressed toward the frictional surfaces 6 via the pistons 55, the adiabatic plate 61, and the holder 8. As a result, the linings 9 of the brake pads 7 contact the two frictional surfaces 6 of the vehicle wheel 5 in opposing orientations, whereby a brake is applied to the rotation of the vehicle wheel 5 by means of frictional force.

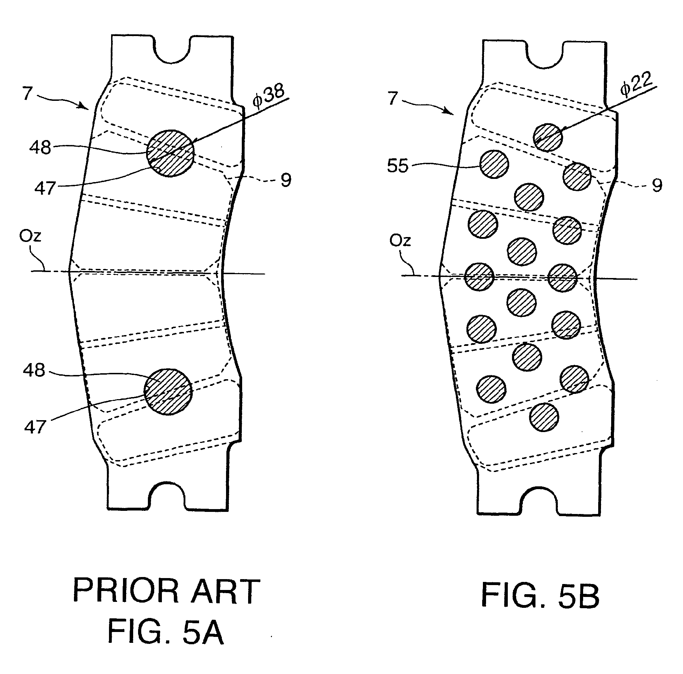

FIG. 5A shows a conventional hydraulic piston type caliper brake device. This conventional device performs braking by having a pair of pistons press the brake pad 7 against a rotor using working oil pressure introduced into an oil pressure chamber 48. In this conventional device, the dimensions of a cylinder 47 housing the pistons and a required oil pressure introduced into the oil pressure chamber 48 are set as follows. A hatched portion in the figure indicates a pressure receiving surface area of the piston.
Diameter of cylinder 47: ϕ 38 (mm) x 2
Sectional area of cylinder 47 (pressure receiving surface area of piston): 2,268 square millimeters (mm²)
Required oil pressure: 9 megapascals (MPa)
Pressing force = 2268 x 9 = approx. 20 kilonewtons (kN)

FIG. 5B shows the air pressure diaphragm type caliper brake device 1 according to this invention. Here, the sectional area of the cylinder 80 and the required air pressure introduced into the pressure chamber 63 are set as follows.
Sectional area of cylinder 80 (= pressure receiving surface area of diaphragm 75): 27,697 (mm²)
Required air pressure: 0.75 (MPa)
Pressing force = 27697 x 0.75 = approx. 20 (kN)

The brake pad pressing force of the caliper brake device 1 according to this invention is approximately 20kN, i.e. identical to that of the conventional hydraulic piston type caliper brake device.

Hence, the diaphragm 75 has a sufficiently large pressure receiving surface area within the limited space of the brake caliper 10, and therefore the actuator 60 of the caliper brake device 1 can apply the required pressing force to the brake pad 7 using air pressure that is much lower than the required oil pressure.

The caliper brake device 1 according to this invention presses the brake pad 7 against the frictional surface 6 via the plurality of pistons 55 by causing the diaphragm 75 to expand. Even when the brake caliper 10 bends or deformation occurs on a rotation surface of the frictional surface due to a reaction force to the pressing force, the brake pad 7 is pressed against the frictional surface 6 with an even contact pressure. Therefore, a frictional coefficient of the brake pad 7 can be kept high at all times, and as a result, the original braking force of the brake pad 7 can be exhibited. Furthermore, since the contact pressure is even, local temperature increases are unlikely to occur in the brake pad 7 or the frictional surface, and therefore partial wear is unlikely to occur on the brake pad 7 and the frictional surface 6.

When the caliper arm 12 of the brake caliper 10 bends in a separating direction from the frictional surface 6 of the vehicle wheel 5 during braking, the pistons 55 perform a large stroke in a region where the separation distance between the caliper arm 12 and the frictional surface 6 is large, and therefore the brake pad 7 is held parallel to the frictional surface 6. Hence, partial wear of the lining 9 in a radial direction can be prevented.

In the caliper brake device 1, the pistons 55 and the guide frame 65 are interposed between the diaphragm 75 and the brake pad 7, and therefore heat generated by the brake pad 7 is prevented from being transmitted to the diaphragm 75 by these members. Hence, the diaphragm 75 is unlikely to suffer heat-related damage.

The actuator 60 drives the brake pad 7 directly using air pressure supplied from the air pressure source installed in the railway vehicle, and therefore, there is no need to install a pneumatic-hydraulic converter, an oil pressure source, and hydraulic piping in the railway vehicle. Hence, by employing the caliper brake device 1 according to this invention, a reduction in the weight of the railway vehicle can be achieved.

Instead of supplying air pressure to the pressure chamber 63 of the caliper brake device 1, oil pressure may be supplied. In this case also, a large number of pistons are used in comparison with a conventional hydraulic piston type caliper brake device, and therefore the brake pad 7 can be pressed evenly. Moreover, by employing a large number of pistons, the pressure receiving surface area increases, and as a result, the required pressing force can be secured at a low oil pressure. Hence, the size of the pneumatic-hydraulic converter can be reduced.

In the caliper brake device 1, the pressure chamber 63 is disposed between the pair of anchor pins 43, and the cylinder inner wall 82 that delimits the pressure chamber 63 is formed with a substantially elliptical cross-section. Therefore, a sufficiently large pressure receiving surface area can be secured on the diaphragm 75, and the pressing force can be applied to a wide range of the brake pad 7. Furthermore, the diaphragm 75 housed in the pressure chamber 63 having a substantially elliptical cross-section curves gently in a circumferential direction, or in other words in a ZY plane, and does not have any sites that curve sharply. Moreover, the chamfered portion 83 formed between the attachment seat 81 and the cylinder inner wall 82 mitigates the sharp curve of the diaphragm 75 in an XY plane. Hence, load concentration is unlikely to occur in the diaphragm 75, and as a result, the diaphragm 75 exhibits favorable durability.

In the actuator 60, the bellows portion 77 is disposed on the inside of the cylinder inner wall 82, and therefore a situation in which the bellows portion 77 is caused to expand sideward by the air pressure introduced into the pressure chamber 63 during braking can be prevented by the cylinder inner wall 82. Hence, an air flow rate required to press the brake pad 7 can be suppressed to a low level, and the response of the vehicle wheel 5 to braking by the brake pad 7 can be improved.

The peripheral edge portion 76 of the diaphragm 75 is sandwiched between the ring-shaped attachment seat 81 and the cover 92, and the pressure chamber 63 is provided between the cover 92 and the diaphragm 75. Therefore, the actuator 60 can be accommodated within a small space inside the brake caliper 10 such that an increase in the size of the brake caliper 10 is avoided.

Further, the pistons 55 contact the holder 8 via the adiabatic plate 61, and therefore the heat of the brake pad 7 is unlikely to be transmitted to the diaphragm 75. Thus, an environment in which the diaphragm 75 is unlikely to suffer heat damage is obtained.

In the caliper brake device 1, the plurality of pistons 55 press the brake pad 7 via the holder 8 latched to the anchor pins 43. This structure is preferable in terms of improving the support rigidity of the brake pad 7. Moreover, the brake pad 7 can be attached to and detached from the brake caliper 10 easily.

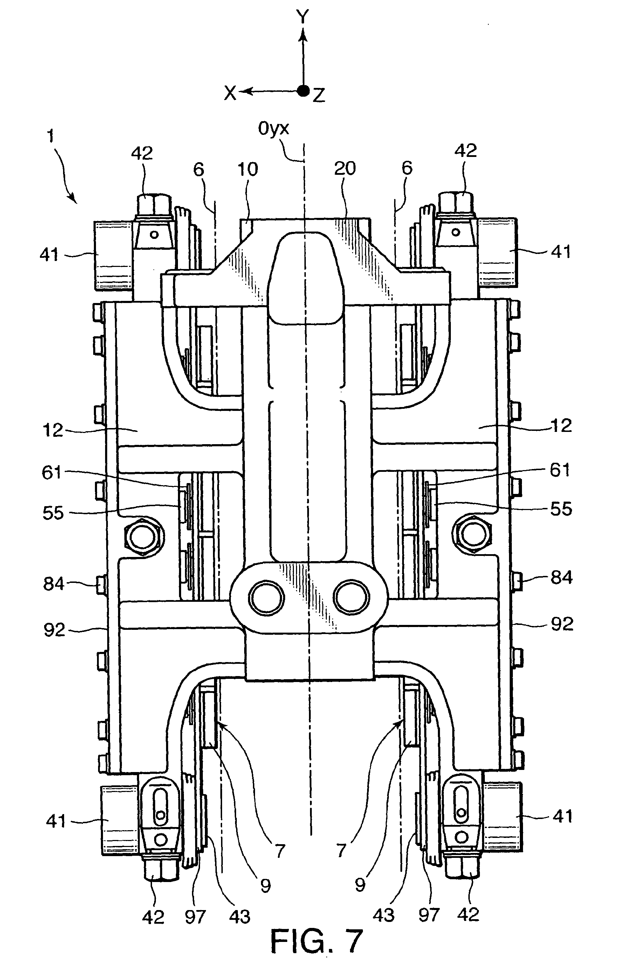

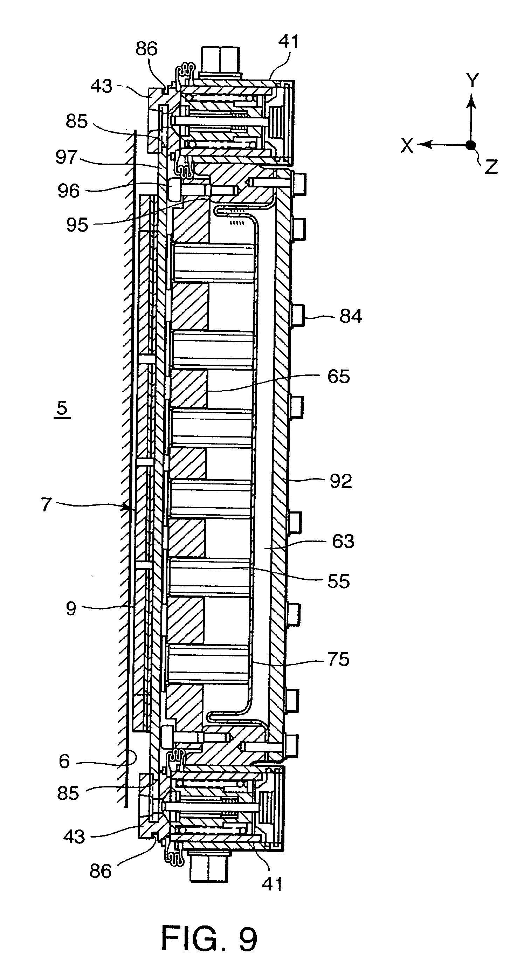

Referring to FIGs. 6 to 9, a second embodiment of this invention will be described.

In this embodiment, the holder 8 is omitted and the brake pad 7 is supported by the anchor pins 43 directly.

The brake pad 7 is constituted by the lining 9 and the body 97 to which the lining 9 is fixed.

A ring-shaped groove 86 is formed in the tip end of each anchor pin 43. An engaging portion 85 that engages with the ring-shaped groove 86 is formed on the upper end and the lower end of the body 97.

The brake pad 7 engages the engaging portion 85 on the upper end of the body 97 with the ring-shaped groove 86 in the upper anchor pin 43 and engages the engaging portion 85 on the lower end of the body 97 with the ring-shaped groove 86 in the lower anchor pin 43. Thus, the brake pad 7 is supported on the caliper arm 12 to be capable of advancing and retreating relative to the frictional surface 6, and therefore the brake pad 7 advances and retreats relative to the frictional surface 6 in accordance with expansion and contraction of the diaphragm 75.

All other structures of the caliper brake device 1 are identical to their counterparts in the first embodiment.

In this embodiment, the holder 8 is omitted and the two ends of the brake pad 7 are latched directly to the anchor pins 43, and therefore the structure of the caliper brake device 1 can be simplified. Further, the dimension of the brake caliper 10 in the X axis direction can be reduced. By omitting the holder 8, the ability of the lining 9 to follow the shape and deformation of the frictional surface 6 is improved.

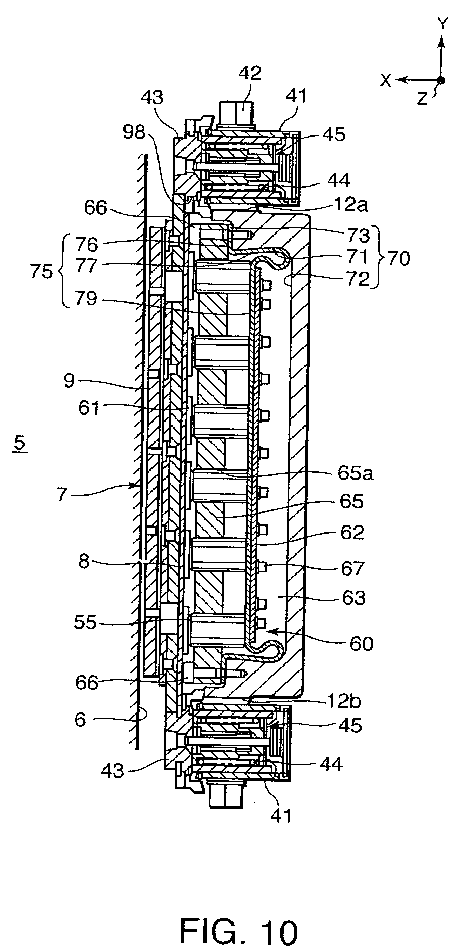

Referring to FIG. 10, a third embodiment of the invention will be described.

In this embodiment, the support structure of the diaphragm 75 differs from that of the second embodiment.

The caliper brake device 1 according to this embodiment includes a cylinder 70 instead of the cylinder 80 according to the first embodiment.

The cylinder 70 comprises a cylinder inner wall 71 extending in the X axis direction, a bottom portion 72 formed integrally with the cylinder inner wall 71 on a plane defined by the Y axis and the Z axis so as to close one end of the cylinder 70, and a ring-shaped attachment seat 73 formed on another end of the cylinder inner wall 71. The cylinder inner wall 71 takes the same shape as the cylinder inner wall 82 of the first embodiment or a substantially kidney type shape corresponding to the shape of the lining 9.

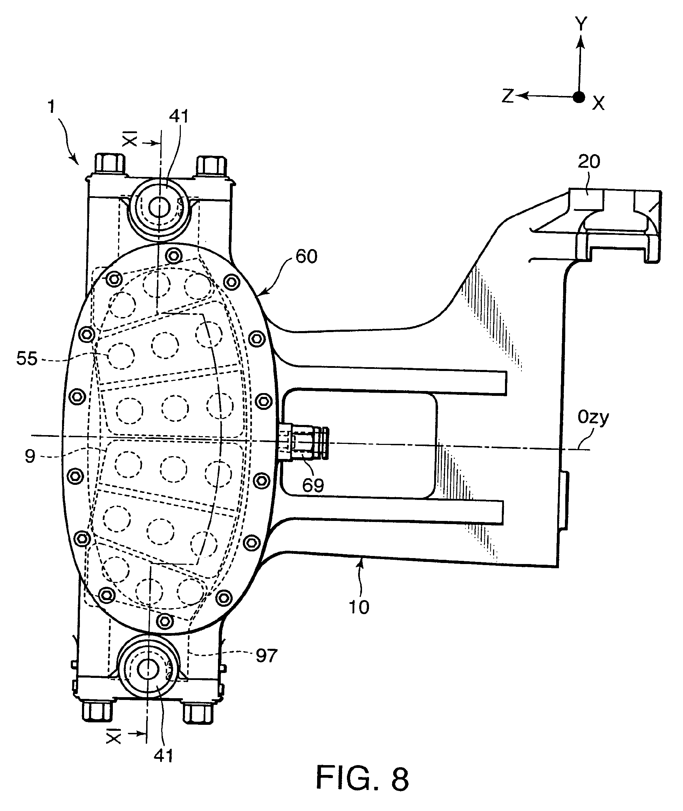

The cylinder 70 and the adjustor attachment recess portions 12a, 12b are formed symmetrically about the center line Ozy of the brake caliper 10 shown in FIG. 8, similarly to the brake pad 7.

The ring-shaped attachment seat 73 is formed on a plane defined by the Y axis and the Z axis on one end of the cylinder inner wall 71. A peripheral edge portion of the guide frame 65 is fixed to the attachment seat 71 by a plurality of bolts 66. Further, the peripheral edge portion 76 of the diaphragm 75 is sandwiched between the peripheral edge portion of the guide frame 65 and the attachment seat 73.

The diaphragm 75 is constituted by the peripheral edge portion 76, the bellows portion 77, which expands from the peripheral edge portion 76 toward the bottom portion 72 along the cylinder inner wall 71 and then curves back substantially 180 degrees inward, and the piston pressing portion 79, which forms a parallel plane to the brake pad 7 on the inside of the bellows portion 77. The peripheral edge portion 76, bellows portion 77, and piston pressing portion 79 are formed integrally from an elastic material such as rubber. The piston pressing portion 79 has a planar form which is slightly smaller than, but similar to, the transverse section of the cylinder 70 defined by the cylinder inner wall 71.

A back surface plate 62 is attached to a back surface of the piston pressing portion 79 of the diaphragm 75. The back surface plate 62 is fixed to the piston pressing portion 79 by a plurality of bolts 67. The back surface plate 62 is formed from a plate material having a substantially identical shape to the piston pressing portion 79. The bolts 67 are disposed at substantially equal intervals around the peripheral edge portion of the back surface plate 62.

By providing the diaphragm 75 with the above constitution, the cylinder inner wall 71 is positioned on the inside of the pressure chamber 63, in contrast to the cylinder inner wall 82 of the first embodiment.

Similar favorable effects to those of the first embodiment are obtained in this embodiment.

Moreover, in this embodiment, the back surface plate 62 is attached to the piston pressing portion 79, and therefore the rigidity of the piston pressing portion 79 can be improved. It should be noted that the back surface plate 62 may be attached to a front surface of the piston pressing portion 79. Alternatively, the back surface plate 62 may be omitted.

Although the invention has been described above with reference to certain embodiments, the invention is not limited to the embodiments described above. Modifications and variations of the embodiments described above will occur to those skilled in the art, within the scope of the claims.

The invention was described above using several specific embodiments, but this invention is not limited to the above embodiments, and a person skilled in the art may add various corrections or modifications to these embodiments within the technical scope of the claims.

For example, in the above embodiments, the frictional surfaces 6 formed on either side of the vehicle wheel 5 are sandwiched between the pair of brake pads 7. However, this invention may be applied to a caliper brake device in which the frictional surfaces 6 are formed on the respective surfaces of a rotor that rotates integrally with the vehicle wheel 5 such that these frictional surfaces 6 are sandwiched between the brake pads 7.

### INDUSTRIAL APPLICABILITY

As described above, with the caliper brake device according to this invention, a pressing force for pressing a brake pad against a rotary body can be made even. Hence, when the caliper brake device according to this invention is applied to a vehicle wheel braking device for a railway vehicle, in which a great brake pad pressing force is required, a particularly favorable effect is obtained.

## Claims

1. A caliper brake device (1) for a vehicle, which applies a braking force to a rotary body (5) by sandwiching a pair of frictional surfaces (6) formed on either side of the rotary body (5), comprising:
a brake caliper (10) that is fixed to a vehicle body and comprises a pair of caliper arms (12) disposed so as to straddle the rotary body (5);
a brake pad (7) that is supported on each of the caliper arms (12) so as to face the corresponding frictional surface (6) of the pair of frictional surfaces (6), and applies a braking force to the corresponding frictional surface (6) by displacing toward the
corresponding frictional surfaces (6); **characterised by** a pressure chamber (63) formed in each of the caliper arms (12);
a diaphragm (75) that expands in accordance with a pressure of the pressure chamber (63);
a plurality of pistons (55) that drive the brake pad (7) toward the corresponding frictional surface (6) in accordance with the expansion of the diaphragm (75); and
a guide member (65) that guides a displacement of the plurality of pistons (55) in a right-angle direction relative to the corresponding frictional surface (6).

2. The caliper brake device (1) as defined in Claim 1, wherein each of the caliper arms (12) further comprises a pair of anchor pins (43) that support the brake pad (7) to be capable of displacing in a right-angle direction relative to the frictional surface (6), and the pressure chamber (63) is formed between the pair of anchor pins (43).

3. The caliper brake device (1) as defined in Claim 2, further comprising:
a spring (44) that biases the anchor pin (43) in a separating direction from the frictional surface (6); and
a gap adjustment mechanism (45) that keeps a distance between the anchor pin (43) and the frictional surface (6) constant when an external force other than a spring force of the spring (44) does not act on the brake pad (7).

4. The caliper brake device (1) as defined in any one of Claim 1 through Claim 3, wherein
the diaphragm (75) comprises a piston pressing portion (79) that contacts the brake pad (7) via the plurality of pistons (55) and a bellows portion (77) formed on a periphery of the piston pressing portion (79) to allow the piston pressing portion (79) to displace in a rotary axis direction of the rotary body (5),
each of the caliper arms (12) comprises a cylinder (70, 80) which accommodates the diaphragm (75) and includes a bottom portion (72, 92),
the pressure chamber (63) is formed between the bottom portion (72, 92) of the cylinder (70, 80) and the diaphragm (75),
the guide member (65) is constituted by a guide frame into which the plurality of pistons (55) are inserted to be free to slide, and
the cylinder (70, 80) comprises a cylinder inner wall (71, 82) surrounding the bellows portion (77) and a ring-shaped attachment seat (73, 95) to which a peripheral edge portion of the guide frame is fixed.

5. The caliper brake device (1) as defined in any one of Claim 1 through Claim 3, further comprising an adiabatic plate (61) that is interposed between the respective pistons (55) and the brake pad (7).

6. The caliper brake device (1) as defined in Claim 4, wherein the brake pad (7) comprises a lining (9) having a shape that is bent in a rotation direction of the frictional surface (6), and the cylinder (80) has a substantially elliptical transverse section covering the lining (9).

7. The caliper brake device (1) as defined in Claim 2 or Claim 3, further comprising a holder (8) that latches the brake pad (7) to the pair of anchor pins (43).

8. The caliper brake device (1) as defined in Claim 4, wherein the diaphragm (75) further comprises a peripheral edge portion (76) sandwiched between the peripheral edge portion of the guide frame and the attachment seat (73).

9. The caliper brake device (1) as defined in Claim 4, further comprising a back surface plate (62) fixed to a rear surface of the piston pressing portion (79).

10. The caliper brake device (1) as defined in Claim 4, wherein the bottom portion (72, 92) is constituted by a cover (92) fixed to one end of the cylinder (80), and the diaphragm (75) comprises a peripheral edge portion (76) sandwiched between a diaphragm attachment seat (81) formed on one end of the cylinder (80) and the cover (92).

11. The caliper brake device (1) as defined in Claim 10, wherein the cylinder (80) further comprises a chamfered portion (83) provided between the diaphragm attachment seat (81) and the cylinder inner wall (82).

12. The caliper brake device (1) as defined in Claim 2 or Claim 3, wherein the brake pad (7) comprises a pair of edges (85) that are latched directly to the pair of anchor pins (43).

## Patentansprüche

1. Sattelbremsvorrichtung (1) für ein Fahrzeug, die eine Bremskraft auf einen Drehkörper (5) durch Dazwischenbringen eines Paares von Reibungsoberflächen (6), gebildet auf jeder Seite des Drehkörpers (5), aufbringt, aufweisend:
einen Bremssattel (10), der an einer Fahrzeugkarosserie befestigt ist und der ein Paar von Sattelarmen (12), angeordnet zum Überspreizen um den Drehkörper (5), aufweist;
ein Bremskissen (7), das auf jedem Sattelarm (12) gelagert ist, um sich der entsprechenden Reibungsoberfläche (6) des Paares der Reibungsoberflächen (6) zuzuwenden, und eine Bremskraft auf die entsprechenden Reibungsoberflächen (6) durch Verlagern in Richtung der entsprechenden Reibungsoberflächen (6) aufbringt;
eine Druckkammer (63), gebildet in jedem der Sattelarme (12); **gekennzeichnet durch**
eine Membran (75), die sich in Übereinstimmung mit einem Druck der Druckkammer (63) ausdehnt;
eine Mehrzahl von Kolben (55), die das Bremskissen (7) in Richtung zu der entsprechenden Reibungsoberfläche (6) in Übereinstimmung mit der Ausdehnung der Membran (75) antreiben; und
ein Führungsteil (65), das eine Verlagerung der Mehrzahl von Kolben (55) in einer rechtwinkligen Richtung in Bezug zu der entsprechenden Reibungsoberfläche (6) führt.

2. Sattelbremsvorrichtung (1) nach Anspruch 1, wobei jeder der Sattelarme (12) außerdem ein Paar von Ankerbolzen (43) aufweist, das das Bremskissen (7) lagert, um in der Lage zu sein, sich in einer rechtwinkligen Richtung in Bezug auf die Reibungsoberfläche (6) zu verlagern, und die Druckkammer (63) zwischen dem Paar von Ankerbolzen (43) gebildet ist.

3. Sattelbremsvorrichtung (1) nach Anspruch 2, außerdem aufweisend:
eine Feder (44), die den Ankerbolzen (43) in einer von der Reibungsoberfläche (6) trennende Richtung vorspannt; und
eine Spalteinstellvorrichtung (45), die einen Abstand zwischen dem Ankerbolzen (43) und der Reibungsoberfläche (6) konstant beibehält, wenn eine äußere Kraft, die anders als die Federkraft der Feder (44) ist, nicht auf das Bremskissen (7) wirkt.

4. Sattelbremsvorrichtung (1) nach einem von Anspruch 1 bis Anspruch 3, wobei die Membran (75) einen Kolbenpressabschnitt (79) aufweist, der das Bremskissen (7) über die Mehrzahl von Kolben (55) berührt, und einen Balgabschnitt (77), gebildet an einem Umfang des Kolbenpressabschnittes (79), um dem Kolbenpressabschnitt (79) zu gestatten, sich in einer Drehachsenrichtung des Drehkörpers (5) zu verlagern, wobei jeder der Sattelarme (12) einen Zylinder (70, 80) aufweist, der die Membran (75) unterbringt und einen Bodenabschnitt (72, 92) enthält,
die Druckkammer (63) zwischen dem Bodenabschnitt (72, 92) des Zylinders (70, 80) und der Membran (75) gebildet ist,
das Führungsteil (65) durch einen Führungsrahmen gebildet ist, in den die Mehrzahl von Kolben (55) eingesetzt ist, um frei zu gleiten, und
der Zylinder (70, 80) eine Zylinderinnenwand (71, 82) aufweist, die den Balgabschnitt (77) umgibt, und einen ringförmigen Verbindungsitz (73, 95), an dem ein Umfangskantenabschnitt des Führungsrahmens befestigt ist.

5. Sattelbremsvorrichtung (1) nach einem von Anspruch 1 bis Anspruch 3, außerdem aufweisend eine adiabatische Platte (61), die zwischen die jeweiligen Kolben (55) und das Bremskissen (7) eingesetzt ist.

6. Sattelbremsvorrichtung (1) nach Anspruch 4, wobei das Bremskissen (7) ein Futter (9) aufweist, das eine Form hat, die in Drehrichtung der Reibungsoberfläche (6) gebogen ist, und der Zylinder (80) einen im Wesentlichen elliptischen Querabschnitt hat, der das Futter (9) abdeckt.

7. Sattelbremsvorrichtung (1) nach Anspruch 2 oder Anspruch 3, außerdem aufweisend einen Halter (8), der das Bremskissen (7) an dem Paar von Ankerbolzen (43) einklinkt.

8. Sattelbremsvorrichtung (1) nach Anspruch 4, wobei die Membran (75) außerdem einen Umfangskantenabschnitt (76) aufweist, eingebracht zwischen den Umfangskantenabschnitt des Führungsrahmens und dem Verbindungsitz (73).

9. Sattelbremsvorrichtung (1) nach Anspruch 4, außerdem aufweisend eine Rückseitenplatte (62), befestigt an einer hinteren Oberfläche des Kolbenpressabschnittes (79).

10. Sattelbremsvorrichtung (1) nach Anspruch (4), wobei der Kolbenabschnitt (72, 92) durch eine Abdeckung (92), befestigt an einem Ende des Zylinders (80), gebildet ist und die Membran (75) einen Umfangskantenabschnitt (76) aufweist, eingebracht zwischen einem Membranverbindungssitz (81) und einem Ende des Zylinders (80) und der Abdeckung (92).

11. Sattelbremsvorrichtung (1) nach Anspruch 10, wobei der Zylinder (80) außerdem einen abgeschrägten Abschnitt (83) aufweist, vorgesehen zwischen dem Membranverbindungssitz (81) und der Zylinderinnenwand (82).

12. Sattelbremsvorrichtung (1) nach Anspruch 2 oder Anspruch 3, wobei das Bremskissen (7) ein Paar von Kanten (85) aufweist, das direkt an einem Paar von Ankerbolzen (43) eingeklinkt ist.

## Revendications

1. Dispositif de frein à étrier (1) pour véhicule, qui applique une force de freinage à un corps rotatif (5) en prenant en sandwich une paire de surfaces de friction (6) formées de part et d'autre du corps rotatif (5), comprenant :
- un frein à étrier (10) qui est fixé au châssis d'un véhicule et comprend une paire de bras d'étrier (12) disposés de façon à chevaucher le corps rotatif (5) ;
- un patin de frein (7) qui est supporté sur chacun des bras d'étrier (12), de façon à faire face à la surface de friction (6) correspondante de la paire de surfaces de friction (6), et applique une force de freinage à la surface de friction (6) correspondante en se déplaçant vers les surfaces de friction (6) correspondantes ;
- une chambre de pression (63) formée dans chacun des bras d'étrier (12) ;
- **caractérisé par** :
- un diaphragme (75) qui s'étend suivant une pression de la chambre de pression (63) ;
- une pluralité de pistons (55) qui entrainent le patin de frein (7) vers la surface de friction (6) correspondante suivant l'expansion du diaphragme (75) ; et
- un élément de guidage (65) qui guide un déplacement de la pluralité de pistons (55) dans une direction à angle droit par rapport à la surface de friction (6) correspondante.

2. Dispositif de frein à étrier (1) selon la revendication 1, dans lequel chacun des bras d'étrier (12) comprend en outre une paire de broches d'ancrage (43) qui supportent le patin de frein (7) pour être capable de se déplacer dans une direction à angle droit par rapport à la surface de friction (6) et la chambre de pression (63) est formée entre la paire de broches d'ancrage (43).

3. Dispositif de frein à étrier (1) selon la revendication 2, comprenant en outre :
- un ressort (44) qui sollicite la broche d'ancrage (43) dans une direction de séparation à partir de la surface de friction (6) ; et
- un mécanisme d'ajustement d'intervalle (45) qui maintient une distance entre la broche d'ancrage (43) et la surface de friction (6) constante lorsqu'une force externe autre qu'une force de ressort du ressort (44) n'agit pas sur le patin de frein (7).

4. Dispositif de frein à étrier (1) selon l'une quelconque des revendications 1 à 3, dans lequel :
- le diaphragme (75) comprend une partie de poussée de piston (79) qui vient au contact du patin de frein (7) via la pluralité de pistons (55) et une partie de soufflet (77) formée sur une périphérie de la partie de poussée de piston (79) pour permettre à la partie de poussée de piston (79) de se déplacer dans une direction de l'axe de rotation du corps rotatif (5) ;
- chacun des bras d'étrier (12) comprend un cylindre (70, 80) qui reçoit le diaphragme (75) et comprend une partie de fond (72, 92) ;
- la chambre de pression (63) est formée entre la partie de fond (72, 92) du cylindre (70, 80) et le diaphragme (75) ;
- l'élément de guidage (65) est constitué par un bâti de guidage dans lequel la pluralité de pistons (55) sont insérés pour être libres de coulisser ; et
- le cylindre (70, 80) comprend une paroi intérieure de cylindre (71, 82) entourant la partie de soufflet (77) et un siège de fixation annulaire (73, 95) auquel une partie de bord périphérique du bâti de guidage est fixée.

5. Dispositif de frein à étrier (1) selon l'une quelconque des revendications 1 à 3, comprenant en outre une plaque adiabatique (61) interposée entre les pistons (55) respectifs et le patin de frein (7).

6. Dispositif de frein à étrier (1) selon la revendication 4, dans lequel le patin de frein (7) comprend une garniture (9) ayant une forme recourbée dans une direction de rotation de la surface de friction (6) et le cylindre (80) a une coupe transversale sensiblement elliptique recouvrant la garniture (9).

7. Dispositif de frein à étrier (1) selon la revendication 2 ou la revendication 3, comprenant en outre un support (8) qui verrouille le patin de frein (7) à la paire de broches d'ancrage (43).

8. Dispositif de frein à étrier (1) selon la revendication 4, dans lequel le diaphragme (75) comprend en outre une partie de bord périphérique (76) prise en sandwich entre la partie de bord périphérique du bâti de guidage et le siège de fixation (73).

9. Dispositif de frein à étrier (1) selon la revendication 4, comprenant en outre une plaque de surface dorsale (62) fixée à une surface arrière de la partie de poussée de piston (79).

10. Dispositif de frein à étrier (1) selon la revendication 4, dans lequel la partie de fond (72, 92) est constituée par un couvercle (92) fixé à une extrémité du cylindre (80) et le diaphragme (75) comprend une partie de bord périphérique (76) prise en sandwich entre un siège de fixation de diaphragme (81) formé sur une extrémité du cylindre (80) et le couvercle (92).

11. Dispositif de frein à étrier (1) selon la revendication 10, dans lequel le cylindre (80) comprend en outre une partie chamfreinée (83) ménagée entre le siège de fixation de diaphragme (81) et la paroi intérieure du cylindre (82).

12. Dispositif de frein à étrier (1) selon la revendication 2 ou la revendication 3, dans lequel le patin de frein (7) comprend une paire de bords (85) qui sont verrouillés directement sur la paire de broches d'ancrage (43).
